# EUROPÄISCHE PATENTANMELDUNG

(11) **EP 1 217 200 A2**
(43) Veröffentlichungstag der Anmeldung: **26.06.2002**
(21) Anmeldenummer: 01120460.9
(22) Anmeldetag: 28.08.2001
(51) Int. Cl.: F02M 35/10

(54) **Luftansaugkanalsystem für eine Brennkraftmaschine**

(30) Priorität: 19.12.2000 DE 10063207
(71) Anmelder: Pierburg Aktiengesellschaft, 41460 Neuss (DE)
(72) Erfinder: Hüsges, Hans-Jürgen, 47877 Willich (DE)
(74) Vertreter: Ter Smitten, Hans

(57) **Zusammenfassung**

Luftansaugkanalsystem für eine Brennkraftmaschine mit einem äußeren Gehäuse, das aus mindestens zwei Gehäuseteilen besteht, die über Dichtflächen miteinander verbunden sind, wobei das Gehäuse einen Sammeleinlaßkanal aufweist, von dem zu Zylindern der Brennkraftmaschine führende Einzelansaugkanäle abzweigen, die jeweils zwei axiale und einen radialen Wandbereich aufweisen, wobei diese Einzelansaugkanäle Verstellorgane zum Verändern der effektiven Ansaugkanallänge aufweisen wobei die Verstellorgane durch Gliederbänder (12) gebildet sind, die sich an den axialen Wandbereichen (17) mittels Führungsorganen (18) abstützen.

## Beschreibung

Die Erfindung betrifft ein Luftansaugkanalsystem für eine Brennkraftmaschine mit einem äußeren Gehäuse, das aus mindestens zwei Gehäuseteilen besteht, die über Dichtflächen miteinander verbunden sind, wobei das Gehäuse einen Sammeleinlaßkanal aufweist, von dem zu Zylindern der Brennkraftmaschine führende Einzelansaugkanäle abzweigen, die jeweils zwei axiale und einen radialen Wandbereich aufweisen, wobei diese Einzelansaugkanäle Verstellorgane zum Verändern der effektiven Ansaugkanallänge aufweisen.

Ein derartiges Luftansaugkanalsystem ist beispielsweise aus der DE 197 56 332 A1 bekannt. Diese Druckschrift beschreibt ein Luftansaugkanalsystem für eine Brennkraftmaschine mit V-förmig angeordneten Zylindern, wobei die Einzelansaugkanäle aus Passtücken aufgebaut sind und durch bewegbare Abdeckkörper verschlossen oder geöffnet werden können. Diese Abdeckkörper sind dabei über Rippenelemente mit einer Antriebswelle verbunden, um durch ein Verdrehen der Antriebswelle die effektive Saugrohrlänge zu verändern. Um ein Verdrehen der Abdeckkörper zu ermöglichen, besteht zwischen den Rippenelementen und der Antriebswelle eine formschlüssige Verbindung, wie z. B. eine Vielkeilprofilausbildung. Aufgrund dieser Ausbildung kann sich das Verstellorgan lediglich auf einer kreisförmigen Bahn um die Antriebswelle bewegen, was dazu führt, daß das vorliegende Luftansaugkanalsystem hinsichtlich der konstruktiven Gestaltungsmöglichkeiten stark beschränkt ist.

Hiervon ausgehend liegt der Erfindung daher die Aufgabe zugrunde, ein gattungsgemäßes Luftansaugkanalsystem zu schaffen, das den oben genannten Nachteil vermeidet.

Diese Aufgabe wird durch das erfindungsgemäße Luftansaugkanalsystem dadurch gelöst, daß die Verstellorgane durch Gliederbänder gebildet sind, die sich an den axialen Wandbereichen mittels Führungsorganen abstützen. Auf diese Weise ist eine variable Änderung der Länge der Einzelansaugkanallänge möglich und gleichzeitig wird die konstruktive Ausgestaltung des Luftansaugkanalgehäuses nicht durch diese Verstellorgane vorbestimmt.

Eine besonders vorteilhafte Ausführungsform des erfindungsgemäßen Luftansaugkanalsystems besteht darin, daß die Gliederbänder aus in quer zur Bewegungsrichtung verschiebbaren sowie gelenkig miteinander verbundenen Lamellen bestehen. Die Führungsorgane können aus in Seitenwänden der Glieder gelagerten Kugeln bestehen, die in den Wandbereichen abrollen. Dabei ist es denkbar, daß die Führungsorgane über in die Führungsorgane eingreifende Zahnräder oder über Bowdenzüge antreibbar sind.

Ausführungsbeispiele der Erfindung sind in der Zeichnung dargestellt und werden nachfolgend beschrieben.

Die Zeichnung zeigt:
- Figur 1: Eine Schnittansicht eines erfindungsgemäßen Luftansaugkanalsystems,
- Figur 2: einen Querschnitt durch ein Lamellenband mit Führungsorgan gemäß einer ersten Ausführungsform,
- Figur 3: einen Querschnitt durch ein Lamellenband mit Führungsorganen gemäß einer zweiten Ausführungsform, und
- Figur 4: eine Draufsicht eines Lamellenbandes.

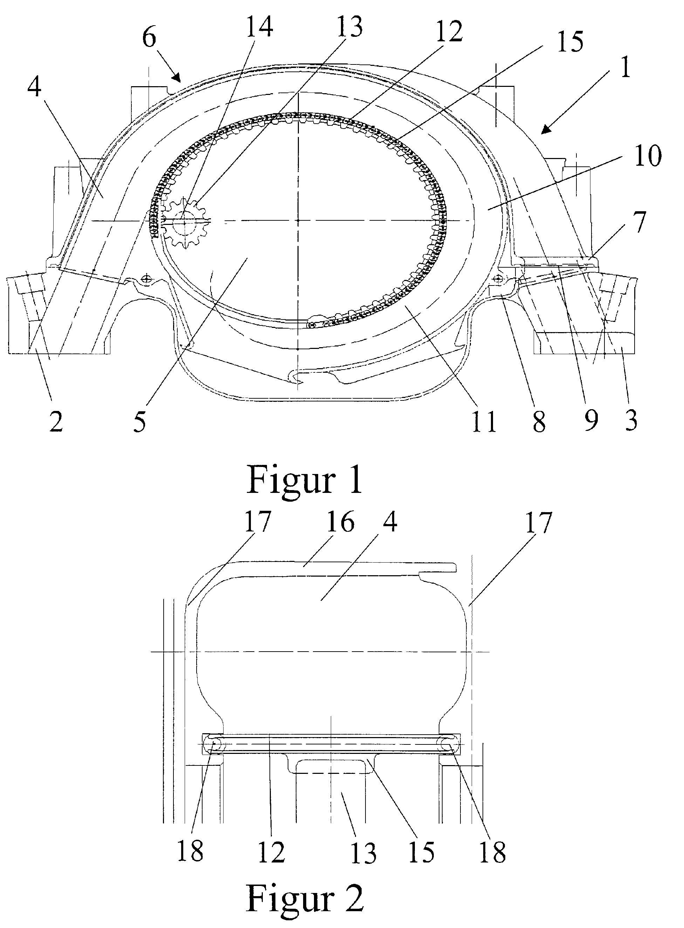

Figur 1 zeigt einen Querschnitt eines Luftansaugkanalsystems 1 für eine Brennkraftmaschine mit V-förmig angeordneten Zylindern, d. h. jeweils ein Einlaßflansch 2, 3 ist mit nicht dargestellten Zylinderreihen der Brennkraftmaschine zu verbinden. Dargestellt ist ein geschnittener Einzelansaugkanal 4, der von einem Sammeleinlaßkanal 5 über den linken Einlaßflansch 2 zu der linken Zylinderreihe führt. Das Luftansaugkanalsystem 1 ist im vorliegenden Ausführungsbeispiel aus einem aus Leichtmetalldruckguß bestehenden äußeren Gehäuse 6 gebildet, das aus wenigstens zwei Gehäuseteilen 7, 8 besteht, die über die Fläche 9 miteinander verbunden sind und kanalbildende Paßstücke 10, 11 in ihrem Innern aufweisen.

Um die Ansauglänge des Einzelansaugkanales 4 kontinuierlich verstellen zu können, ist im vorliegenden Luftansaugkanalsystem 1 ein Verstellorgan 12 angeordnet, das im vorliegenden Fall als Lamellenband ausgebildet ist. Figur 1 zeigt dabei den Einzelansaugkanal 4 mit langer Ansaugkanallänge. Es sollte deutlich sein, daß wenn sich das Lamellenband 12 im Gegenuhrzeigersinn verschiebt, die Kanallänge kontinuierlich verkürzt. Das Lamellenband 12 wird im vorliegenden Ausführungsbeispiel durch ein Zahnrad 13, das auf bekannte Weise auf einer Antriebswelle 14 angeordnet ist, angetrieben. Das Zahnrad 13 greift dabei in Ausformungen 15, die auf der Unterseite des Lamellenbandes 12 angeordnet sind. Es sollte deutlich sein, daß für jeweils ein Lamellenband 12 eines Ansaugkanales ein Zahnrad auf der Antriebswelle 14 zugeordnet ist. Zahnräder und Antriebswelle für die rechten Einzelansaugkanäle sind der Einfachheit halber nicht dargestellt.

Figur 2 zeigt eine Einzelansicht eines Einzelansaugkanals, der im wesentlichen aus einem radialen Wandabschnitt 16 und zwei axialen Wandabschnitten 17 besteht. In Richtung des Sammeleinlaßkanales ist der Einzelansaugkanal 4 durch das Lamellenband 12 abgedeckt. Das Lamellenband 12 weist in Seitenwänden Kugeln 18 auf, die in den axialen Wandabschnitten 17 abrollen und auf diese Weise eine besonders reibungsfreie Verstellung gewährleisten. Weiterhin sind Ausformungen 15 dargestellt, die im Eingriff mit dem Zahnrad 13 stehen.

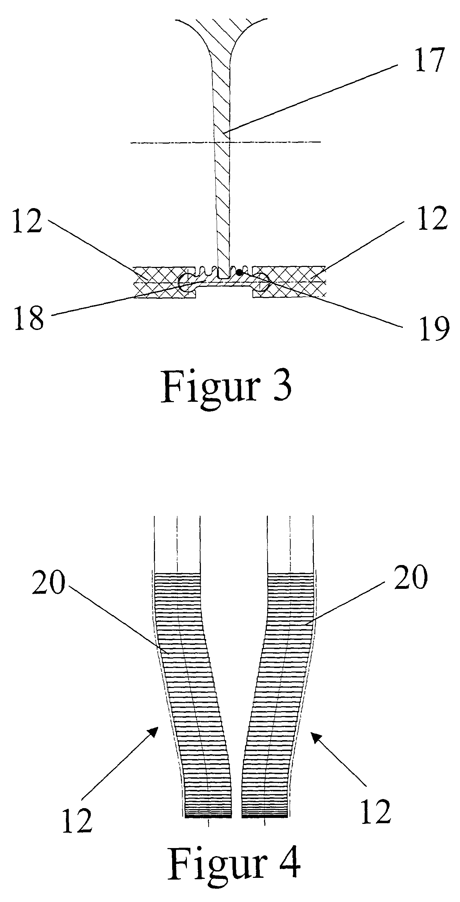

Figur 3 zeigt ebenfalls eine Schnittansicht mit einer weiteren Ausführungsform des Führungsorgans 18, das wiederum auf einen axialen Wandabschnitt 17 beweglich gelagert ist, wobei in diesem Falle ein Bowdenzug 19 in das Führungsorgan 18 eingreift, um die Gliederbänder 12 anzutreiben. Dazu sind auf bekannte Weise im Sammeleinlaßkanal des Luftansaugkanalsystems 1 Antriebswellen angeordnet, auf die der Baudenzug auf- und abgewickelt werden kann.

Figur 4 zeigt eine Draufsicht auf zwei Lamellenbänder 12, die aus miteinander verbundenen Lamellen 20 aufgebaut sind. Deutlich zu erkennen ist der durch die Verwendung von Lamellen zu realisierende seitliche Versatz, wodurch bei variablen, kontinuierlich einzustellenden Einzelansaugkanälen eine wesentlich größere Konstruktionsfreiheit gewährleistet ist.

Es sollte deutlich sein, daß insbesondere beim Antrieb vielfältige äquivalente Lösungen denkbar sind.

## Patentansprüche

1. Luftansaugkanalsystem für eine Brennkraftmaschine mit einem äußeren Gehäuse, das aus mindestens zwei Gehäuseteilen besteht, die über Dichtflächen miteinander verbunden sind, wobei das Gehäuse einen Sammeleinlaßkanal aufweist, von dem zu Zylindern der Brennkraftmaschine führende Einzelansaugkanäle abzweigen, die jeweils zwei axiale und einen radialen Wandbereich aufweisen, wobei diese Einzelansaugkanäle Verstellorgane zum Verändern der effektiven Ansaugkanallänge aufweisen, **dadurch gekennzeichnet, daß** die Verstellorgane durch Gliederbänder (12) gebildet sind, die sich an den axialen Wandbereichen (17) mittels Führungsorganen (18) abstützen.

2. Luftansaugkanalsystem nach Anspruch 1, **dadurch gekennzeichnet, daß** die Gliederbänder (12) aus in quer zur Bewegungsrichtung verschiebbaren sowie gelenkig miteinander verbundenen Lamellen (20) bestehen.

3. Luftansaugkanalsystem nach Anspruch 1 oder 2, **dadurch gekennzeichnet, daß** die Führungsorgane (18) aus in Seitenwänden der Glieder gelagerten Kugeln bestehen, die in den Wandbereichen (17) abrollen.

4. Luftansaugkanalsystem nach Anspruch 3, **dadurch gekennzeichnet, daß** die Gliederbänder (12) über Zahnräder (13) antreibbar sind.

5. Luftansaugkanalsystem nach Anspruch 3, **dadurch gekennzeichnet, daß** die Gliederbänder (12) über Bowdenzüge (19), die mit den Führungsorganen gekoppelt sind, antreibbar sind.
